# NEUE EUROPÄISCHE PATENTSCHRIFT

(11) **EP 3 022 040 B2**
(45) Veröffentlichungstag und Bekanntmachung des Hinweises auf die Entscheidung über den Einspruch: **03.08.2022**
(45) Hinweis auf die Patenterteilung: 21.02.2018
(21) Anmeldenummer: 14728836.9
(22) Anmeldetag: 05.06.2014
(51) Int. Cl.: B29C 55/06, B29C 47/08, B29C 55/28

(54) **VORRICHTUNG ZUR HERSTELLUNG VON INLINE GERECKTEN FOLIEN**
DEVICE FOR PRODUCING FILMS STRETCHED IN-LINE
DISPOSITIF DE FABRICATION DE FEUILLES ÉTIRÉES EN LIGNE

(30) Priorität: 19.07.2013 DE 102013012134
(43) Veröffentlichungstag der Anmeldung: 25.05.2016
(73) Patentinhaber: Windmöller & Hölscher KG, 49525 Lengerich/Westf. (DE)
(72) Erfinder: BACKMANN, Martin, 49525 Lengerich (DE); BUSSMANN, Markus, 45147 Essen (DE); GOLUBSKI, Karsten, 45721 Haltern am See (DE)
(74) Vertreter: Laufhütte, Dieter
(86) Internationale Anmeldenummer: PCT/EP2014/001528
(87) Internationale Veröffentlichungsnummer: WO 2015/007356

(56) Entgegenhaltungen:
- EP-A1- 0 486 858
- EP-A1- 0 673 750
- EP-A1- 1 707 338
- EP-A1- 2 277 681
- EP-A1- 2 849 929
- EP-A2- 0 335 411
- EP-B1- 0 065 278
- WO-A1-2005/102666
- WO-A1-2007/006472
- CH-A- 521 219
- DE-A1- 1 548 243
- DE-A1- 2 146 266
- DE-A1- 3 002 903
- DE-A1- 3 324 978
- DE-A1-102005 035 750
- DE-A1-102011 018 320
- DE-A1-102012 015 462
- DE-A1-102013 012 134
- DE-C1- 3 508 626
- DE-C1- 3 508 626
- DE-C1- 4 218 997
- DE-C2- 3 518 155
- DE-T2- 69 208 002
- DE-U1- 8 707 626
- GB-A- 922 084
- US-A- 2 920 352
- US-A- 2 976 567
- US-A- 3 804 572
- US-A- 5 288 441
- US-A- 5 458 841
- US-A- 5 912 022
- US-B1- 6 241 502
- US-B1- 6 413 346
- US-B1- 6 447 278

## Beschreibung

Die vorliegende Erfindung betrifft eine Vorrichtung zur Herstellung von inline gereckten Schlauchfolien im Blasverfahren nach dem Oberbegriff des Anspruchs 1.

Zur Herstellung von Schlauchfolien im Blasverfahren dienen üblicherweise Blasfolienextrusionsanlagen, die bereits seit langer Zeit im Einsatz sind. Solchen Anlagen werden Kunststoffe in granulierter Form zugeführt, die dann in Extrudern unter hohen Druckeinwirkungen zu einer viskosen Masse plastifiziert werden. Diese Masse, die aufgrund des Druckes eine hohe Temperatur aufweist, wird in einem Blaskopf ringförmig ausgebildet und entweicht dem Blaskopf durch eine Ringdüse. Unmittelbar nach dem Verlassen der Ringdüse bildet die Masse bereits einen Folienschlauch. Dieser Folienschlauch kann jedoch, da er noch nicht vollständig abgekühlt ist, in seinem Durchmesser verändert werden. In der Regel wird der Durchmesser vergrößert, indem in den Innenraum des Folienschlauchs Druckluft eingeblasen wird. Damit der Folienschlauch immer einen konstanten Durchmesser aufweist, wird er auf Abstand zu oder direkt entlang von Folienführungselementen geführt. Diese Anordnung der Folienführungselemente wird auf dem Gebiet der Blasfolienextrusionsanlagen als Kalibrierkorb bezeichnet.

Nach dem Durchlaufen des Kalibrierkorbs, kann der Folienschlauch in einem reversierenden Wendeabzug flachgelegt, verlegt und anschließend in einer Reckanlage monoaxial in Maschinenrichtung verstreckt werden.

Mit dem Recken von thermoplastischen Folien können deren Eigenschaften gezielt verändert werden. Solche Eigenschaften sind beispielsweise die Transparenz oder die Festigkeit. Ein solches Recken, das in Quer- und/oder Längsrichtung der Folienbahn erfolgen kann, kann direkt nach dem Extrusionsprozess inline erfolgen. Das Recken bzw.- Verstrecken von thermoplastischen Folien ist beispielsweise in der WO 2006/063641 A1 und in der WO 2011/057918 A1 beschrieben.

Bei der Herstellung von Schlauchfolien kommen Foliendickenprofilregelsysteme mit segmentierten Regelzonen zum Einsatz. Durch diese Systeme lassen sich die Foliendickenprofile derart regeln, dass die Dickenabweichungen über den gesamten Schlauchumfang möglichst gering sind.

Aus der DE 39 411 85 A1 ist so beispielsweise ein Verfahren zur Regelung der Foliendicke von Schlauchfolien aus Folienblasanlagen mit nachgeschalteter axialer bzw. biaxialer Verstreckung der aufgeblasenen Schlauchfolien in einem Ofen bekannt, so dass eine Endfolie entsteht, die möglichst geringe Abweichungen in der Dicke aufweist.

Bei der Längsverstreckung in einer Reckanlage wird die Folie entsprechend des Reckgrades in Maschinenrichtung gedehnt und dadurch die Foliendicke reduziert. Gleichzeitig schnürt die Folie in Querrichtung ein, wodurch sich die Breite der Folie verringert. Diese Einschnürung hat zur Folge, dass die gereckte Folie von der Folienmitte in Richtung der Folienränder zunehmend geringfügiger dicker wird, obwohl sie zuvor im Blasverfahren auf eine möglichst konstante Dicke geregelt wurde. Besonders ausgeprägt ist diese Dickenzunahme an den Folienrandbereichen. Dieses verursacht beim anschließenden Aufwickeln der Folie einen Kantenaufbau in Foliendicke. Die Folienbahn wird an den Rändern mit zunehmendem Wickeldurchmesser immer mehr gedehnt.

Um Folien mit möglichst gleichmäßigem Dickenprofil, wie sie insbesondere zum Bedrucken oder Laminieren gefordert werden, herzustellen, müssen die Folienränder, die dem gewünschten Dickenprofil nicht entsprechen, weggeschnitten werden. Durch dieses als Besäumen bezeichnetes Wegschneiden geht allerdings ein Großteil der Folienbreite verloren. So fallen auf jeder Seite der Folie bis ca. 200 mm durch das Besäumen, d. h. das Wegschneiden weg.

Aus der EP 2 277 681 B1 ist ein gattungsgemäßes Verfahren bekannt geworden, bei dem das Foliendickenprofil der in der Folienblasanlage hergestellten Schlauchfolie so geregelt wird, dass durch das Recken eine Folie mit einem Dickenprofil mit möglichst geringen Abweichungen von der mittleren Foliendicke über die gesamte Folienbreite hergestellt wird. Hierzu wird im Folienblasprozess eine Schlauchfolie hergestellt, die zwei gegenüberliegende Dünnstellen aufweist. Bei der Flachlegung der Schlauchfolie wird nun darauf geachtet, dass die Dünnstellen im Folienrandbereich liegen und dass die verstreckte Folie dann ein Dickenprofil mit möglichst geringen Abweichungen von der mittleren Foliendicke aufweist. Die gezielt eingebrachten Dünnstellen kompensieren also die später beim Recken entstehenden Verdickungen im Randbereich, so dass sich eine bis in den Randbereich hin erstreckende gleichmäßige Foliendicke ergeben soll.

Bei den vorbekannten Vorrichtungen zur Herstellung von inline gereckten Schlauchfolien im Blasverfahren ist üblicherweise der reversierende Wendeabzug oberhalb des Extruders der Flachlegeeinheit nachgeschaltet. Die Schlauchfolie wird vom Wendeabzug aus üblicherweise an die neben dem Extruder angeordnete Reckanlage weitergefördert und dort entsprechend gereckt, bevor sie auf einem Wickler aufgewickelt wird. Ein derartiger Aufbau ergibt sich beispielsweise aus der EP 2 277 681 B1.

Nachteilig bei dieser Anordnung ist es allerdings, dass die flachgelegte, verlegte und über den reversierenden Wendeabzug abgezogene Schlauchfolie zu dem Zeitpunkt, zu dem sie in die Reckanlage eingeführt wird, schon soweit abgekühlt ist, dass sie zum Recken über zumindest eine Aufheizwalze noch auf eine für das Recken vorteilhafte Betriebstemperatur aufgeheizt werden muss. Dies hat insbesondere energetische Nachteile, da hier die Aufheizenergie nochmals zur Verfügung gestellt werden muss.

Aufgabe der Erfindung ist es daher, eine gattungsgemäße Vorrichtung zur Herstellung von inline gereckten Schlauchfolien im Blasverfahren, insbesondere in energetischer Hinsicht zu optimieren, d. h. den Energiebedarf zur Herstellung zu senken.

Erfindungsgemäß wird diese Aufgabe durch eine Vorrichtung mit der Merkmalskombination des Anspruchs 1 gelöst. Hierzu weist eine Vorrichtung zur Herstellung von inline gereckten Schlauchfolien im Blasverfahren einen Extruder, eine Folienblasanlage, eine Flachlegeeinheit, einen reversierenden Wendeabzug und eine Reckanlage zur monoaxialen Verstreckung der flachgelegten Folie in Maschinenrichtung auf. Allerdings ist die Reckanlage oberhalb des Extruders zwischen der Flachlegeeinheit und dem reversierenden Wendeabzug angeordnet. Das bedeutet, dass die vom Extruder stammende Folie nach dem entsprechenden Flachlegen in der Flachlegeeinheit noch recht warm ist bis sie in die Reckanlage eingeführt wird. Hierdurch kann man zumindest die erste Aufheizwalze einsparen. Die noch warme Folie kann über das Reckwerk in gewünschter Weise verstreckt werden. Dabei ist zwar zur Temperierung immer noch ein weiteres Aufheizen notwendig. Dieses Aufheizen dient aber nur zum genauen Einstellen der Temperatur, da sich die aus dem Extruder und der Flachlegeeinheit kommende Schlauchfolie noch im wesentlich nahe der gewünschten Verarbeitungstemperatur befindet.

Weitere vorteilhafte Ausgestaltungen der Erfindung ergeben sich aus den sich an den Hauptanspruch anschließenden Unteransprüchen.

Vorteilhaft ist die Reckanlage zusammen mit dem ihr in Förderrichtung nachgeschalteten Wendeabzug oberhalb der Flachlegeeinheit auf einer Plattform drehbar gelagert.

Vorteilhaft sind auf der Plattform neben der Reckanlage auch noch weitere Komponenten, wie beispielsweise elektrische Umrichter und/oder Komponenten elektrischer Einspeisung und/oder Antriebe angeordnet. Die Anordnung ist so gewählt, dass hier ein Gewichtsausgleich auf der Plattform erfolgt.

Für die zentrale Strom- und Wasserversorgung oberhalb der Plattform können Schleifringe bzw. eine Wasserdrehdurchführung vorgesehen sein. Vorteilhaft können auch die Kommunikationskabel als Datenleitung auf die Plattform geführt sein.

Oberhalb der Plattform sind an verschiedenen Positionen vorteilhaft Beobachtungssysteme in Form von Kameras angeordnet. Hier kann auf ein jeweiliges Aufsteigen auf die Plattform durch das Bedienpersonal verzichtet werden.

Die Walzen der Reckanlage sind vorteilhaft einzeln angetrieben und temperierbar. Die Walzen bilden mindestens einen Reckspalt, wobei dieser vorteilhaft verstellbar ist. Die Walzen der Reckanlage können unterschiedliche Durchmesser aufweisen, wobei die Reckwalzen einen vergleichsweise kleineren Durchmesser aufweisen.

Vorteilhaft können die Walzen der Reckanlage eine Antihaftbeschichtung aufweisen.

Besonders vorteilhaft können die Walzen der Reckanlage so ausgeführt sein, dass durch Voreilen zumindest einer Walze eine Reckkraft von 100 N bis 1000 N aufbringbar ist.

Zum Temperieren der Walzen des Reckwerkes können mindestens zwei Temperierkreise, nämlich ein Heizkreis und ein Kühlkreis, vorhanden sein. Dabei kann die durch das Reckwerk geführte Blasfolie mittels der temperierten Walzen auf eine Temperatur aufgeheizt werden, die mindestens 10 °C unterhalb der Glastemperatur des Schlauchfolienmaterials liegt. Wesentlich ist gemäß einer weiteren bevorzugten Ausgestaltung, dass die temperierten Walzen über die Walzenbreite eine Temperaturgleichmäßigkeit von < 5 °C, vorzugsweise < 1 °C aufweist.

Besonders vorteilhaft sind im Reckwerk auch Nipwalzen vorgesehen, die vorzugsweise eine andere Oberflächenbeschaffenheit aufweisen als die genippten Walzen.

Zur Energieeinsparung sind erfindungsgemäß zwischen den antreibenden und bremsenden Walzen im Reckwerk jeweils Zwischenkreiskopplungen vorgesehen, die vorzugsweise als elektrische Kopplungen ausgebildet sind.

Anstelle der dem Reckwerk nachgeschalteten Reversiervorrichtung könnte auch vorgesehen sein, dass diese in der Reckvorrichtung selbst dadurch ausgebildet wird, dass die Annealingwalzen in der Reckvorrichtung reversierend am oberen Bereich der Reckvorrichtung ausgebildet sind.

Weitere Merkmale, Einzelheiten und Vorteile der Erfindung werden anhand eines in der Zeichnung dargestellten Ausführungsbeispiels näher erläutert.

Die einzige Figur zeigt eine Folienblasanlage mit nachgeschaltetem Reckwerk nach einer Ausführungsform der vorliegenden Erfindung.

In der Figur ist eine erfindungsgemäße Vorrichtung 10 zur Herstellung von inline gereckten Schlauchfolien im Blasverfahren dargestellt. Über eine Dosiervorrichtung wird das zu verarbeitende Kunststoffgranulat einem Extruder 12 zugeführt, in diesem aufgeschmolzen, homogenisiert und einem Folienblaskopf 14 zugeführt. Der Folienblaskopf 14 weist eine Ringdüse auf, aus der die extrudierte Kunststoffmasse austritt. Durch den Folienblaskopf erfolgt die Zuleitung von Kühlluft zum Aufblasen einer Schlauchfolie 16. Die Schlauchfolie 16 wird durch einen Kalibrierkopf 18 während des Blasvorgangs in Form gehalten.

Nach dem Erstarren des Kunststoffs wird die Schlauchfolie 16 in einer Flachlegeeinheit 20 flachgelegt und nach der Flachlegeeinheit unmittelbar einem oberhalb des Folienblaskopfs 14 angeordneten Reckwerks 22 zugeführt. Das Reckwerk ist auf einer Plattform 24, die oberhalb der Flachlegeeinheit 20 liegt, angeordnet. Hier wird die noch warme aus der Flachlegeeinheit 20 flachgelegt zugeführte Schlauchfolie 16 monoaxial in Maschinenrichtung verstreckt. Die entsprechend verstreckte Folie wird dann über einen oberhalb des Reckwerks 22 angeordneten Wendeabzug 24 kontinuierlich abgezogen und über diverse Walzen 26 einem Wickler 28 zugeführt und zu Folienwickeln aufgewickelt.

Im Reckwerk 22 wird durch Voreilung einer Walze eine Reckkraft von ca. 100 N bis 1000 N aufgebracht. Die Walzen sind zumindest teilweise beheizt, um die Schlauchfolie 16 während des Reckens zu glätten.

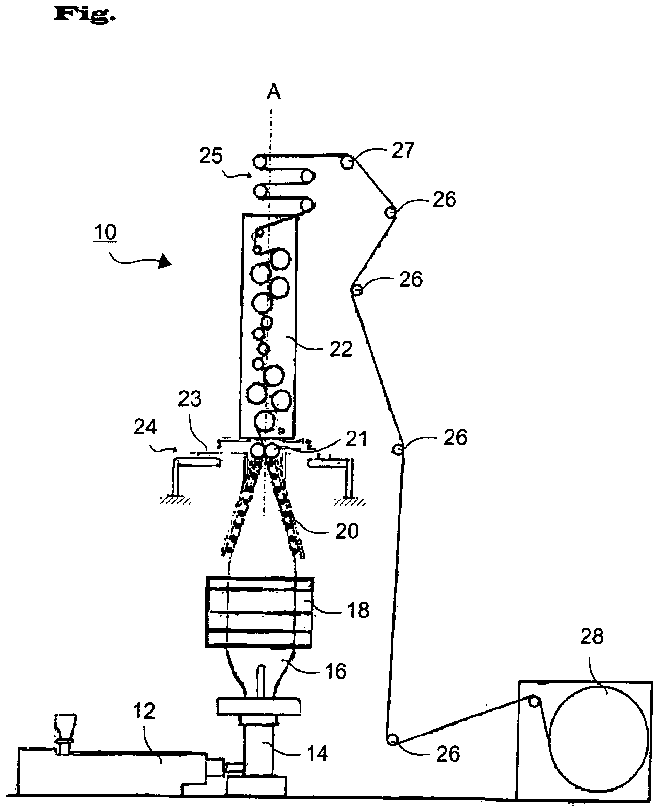

Im hier dargestellten Reckwerk 22 sind vier Reckspalte gezeigt. Üblicherweise muss ein entsprechendes Reckwerk mindestens einen Reckspalt aufweisen. In der hier dargestellten Ausführungsvariante sind alle Walzen des Reckwerks 22 einzeln angetrieben und temperierbar. Wie hier in der Figur 1 angedeutet, haben die Walzen jeweils einen unterschiedlichen Durchmesser, wobei die Reckwalzen einen vergleichsweise kleineren Durchmesser haben. In hier nicht dargestellter Art und Weise können im Reckwerk 22 auch Nipwalzen, d. h. Gegenwalzen, vorgesehen sein.

Vorteilhaft weisen die Walzen im Reckwerk 22 eine Antihaftbeschichtung auf. Die jeweiligen Reckspalte können ebenfalls vorteilhaft verstellbar sein. Üblicherweise wird über die Heizwalzen eine Temperatur von < 10 °C unterhalb der Glastemperatur eingestellt. In einer Ausführungsvariante können im Reckwerk vier Walzen ohne Abzugsnip mit einem Umschlingungswinkel von mehr als 60 °C oder vorzugsweise sogar mehr als 90 °C vorgesehen sein.

Im hier dargestellten Ausführungsbeispiel nach Figur 1 ist das Reckwerk 22 vertikal aufgestellt. Es kann gemäß einer alternativen Ausführungsvariante, die hier nicht dargestellt ist, auch quer auf der Plattform 24 gelagert sein.

Im Rahmen der Erfindung ist im Reckwerk das Drehmoment der Walzen so eingestellt, dass ein bestimmter geregelter Bahnzugfaktor eingestellt wird. In hier nicht dargestellter Weise sind oberhalb des Reckwerks ein Messer oder mehrere Messer vorhanden, die den Beschnitt zur sogenannten Besäumung vornehmen. Hier werden die Randbereiche, die durch das Recken vergleichsweise dicker als die mittleren Bereiche ausgebildet sind, weggeschnitten. Um aber den Verlust durch das Abschneiden der verdickten Randbereiche zu minimieren, ist in der hier gemäß Figur 1 vorgestellten Vorrichtung zur Herstellung von inline gereckten Schlauchfolien vorteilhaft eine Profilregelung zur Vergleichmäßigung der Foliendicke über den gesamten Bereich der Folienbreite vorgesehen, wie sie beispielsweise anhand der deutschen Patentanmeldung 10 2013 007 669 bereits ausführlich beschrieben wurde. Zur Durchführung einer derartigen Profilregelung ist in einer in Figur 1 nicht näher dargestellten Art und Weise ebenfalls eine Profilmessung an den entsprechend notwendigen Stellen, wie sie beispielsweise in der DE 10 2013 007 669 beschreiben wurden, vorzusehen.

## Patentansprüche

1. Vorrichtung zur Herstellung von inline gereckten Schlauchfolien im Blasverfahren mit einem Extruder (12), einer Folienblasanlage (14), einer Flachlegeeinheit (20), einem reversierenden Wendeabzug (25) und einer Reckanlage (22) zum monoaxialen Verstrecken der flachgelegten Folie in Maschinenrichtung,
**dadurch gekennzeichnet,**
**dass** die Reckanlage oberhalb des Extruders zwischen der Flachlegeeinheit und dem reversierenden Wendeabzug angeordnet ist und dass zwischen antreibenden und bremsenden Walzen im Reckwerk eine Zwischenkreiskopplung, vorzugsweise eine elektrische Kopplung, zur Energieeinsparung vorgesehen ist.

2. Vorrichtung nach Anspruch 1, **dadurch gekennzeichnet, dass** die Reckanlage zusammen mit dem ihr in Förderrichtung nachgeschalteten Wendeabzug oberhalb der Flachlegeeinheit auf einer Plattform drehbar gelagert ist.

3. Vorrichtung nach Anspruch 2, **dadurch gekennzeichnet, dass** auf der Plattform neben der Reckanlage weitere Komponenten, wie beispielsweise elektrische Umrichter und/oder Komponenten der elektrischen Einspeisung und/oder Antriebe, angeordnet sind.

4. Vorrichtung nach Anspruch 2 oder 3, **dadurch gekennzeichnet, dass** für die zentrale Strom- und Wasserversorgung oberhalb der Plattform Schleifringe bzw. eine Wasserdrehdurchführung vorgesehen sind und/oder dass ein Kommunikationskabel als Datenleitung auf die Plattform geführt ist.

5. Vorrichtung nach einem der Ansprüche 1 bis 4, **dadurch gekennzeichnet, dass** oberhalb der Plattform an verschiedenen Positionen Beobachtungssysteme, vorzugsweise Kameras, angeordnet sind.

6. Vorrichtung nach einem der vorhergehenden Ansprüche, **dadurch gekennzeichnet, dass** die Walzen der Reckanlage einzeln angetrieben und temperierbar sind und dass die Walzen mindestens einen Reckspalt bilden, wobei dieser vorteilhaft verstellbar ist.

7. Vorrichtung nach einem der vorhergehenden Ansprüche, **dadurch gekennzeichnet, dass** die Walzen der Reckanlage unterschiedliche Durchmesser aufweisen, wobei die Reckwalzen einen vergleichsweise kleineren Durchmesser aufweisen.

8. Vorrichtung nach einem der vorhergehenden Ansprüche, **dadurch gekennzeichnet, dass** die Walzen der Reckanlage eine Antihaftbeschichtung aufweisen.

9. Vorrichtung nach einem der vorangehenden Ansprüche, **dadurch gekennzeichnet, dass** die Walzen der Reckanlage so ausgeführt sind, dass durch Vorteilen zumindest einer Walze eine Reckkraft von 100 bis 1000 N aufbringbar ist.

10. Vorrichtung nach einem der vorangehenden Ansprüche, **dadurch gekennzeichnet, dass** zum Temperieren der Walzen des Reckwerkes mindestens zwei Temperierkreise, nämlich ein Heizkreis und ein Kühlkreis, vorhanden sind.

11. Vorrichtung nach einem der vorangehenden Ansprüche, **dadurch gekennzeichnet, dass** die durch das Reckwerk geführte Blasfolie mittels der temperierten Walzen auf eine Temperatur aufgeheizt wird, die mindestens 10 Grad unterhalb der Glastemperatur des Schlauchfolienmaterials liegt.

12. Vorrichtung nach einem der vorangehenden Ansprüche, **dadurch gekennzeichnet, dass** die temperierten Walzen über die Walzenbreite eine Temperaturgleichmäßigkeit von < 5 Grad Celsius, vorzugsweise < 1 Grad Celsius, aufweist.

## Claims

1. Device for producing tubular films stretched in-line in a blowing method, comprising an extruder (12), a film blowing system (14), a flattening unit (20), an oscillating haul-off unit (25) and a stretching system (22) for mono-axially stretching the flat lying film in a machine direction,
**characterized in that**
the stretching system is arranged above the extruder between the flattening unit and the oscillating haul-off unit, and that an intermediate circuit coupling, preferably an electrical coupling, is provided between driving and braking rollers in the stretching unit in order to save energy.

2. Device according to Claim 1, **characterized in that** the stretching system is rotatably mounted together with the haul-off unit downstream from it in the conveying direction above the flattening unit on a platform.

3. Device according to Claim 2, **characterized in that** in addition to the stretching system further components, such as, for example, electrical converters and/or components of the electrical feed and/or drives, are arranged on the platform.

4. Device according to Claim 2 or 3, **characterized in that** slip rings or a water rotary feedthrough are provided above the platform for the central power and water supply and/or that a communication cable is routed to the platform as a data line.

5. Device according to any one of Claims 1 to 4, **characterized in that** monitoring systems, preferably cameras, are arranged above the platform at different positions.

6. Device according to any one of the preceding claims, **characterized in that** the rollers of the stretching system are individually driven and can be temperature-controlled and that the rollers form at least one stretching gap, wherein the latter is advantageously adjustable.

7. Device according to any one of the preceding claims, **characterized in that** the rollers of the stretching system have different diameters, wherein the stretching rollers have a comparatively smaller diameter.

8. Device according to any one of the preceding claims, **characterized in that** the rollers of the stretching system have an anti-adhesive coating.

9. Device according to any one of the preceding claims, **characterized in that** the rollers of the stretching system are designed such that due to the advantages of at least one roller a stretching force of 100 to 1000 N can be applied.

10. Device according to any one of the preceding claims, **characterized in that** at least two temperature-control circuits, namely a heating circuit and a cooling circuit, are available for the temperature control of the rollers of the stretching unit.

11. Device according to any one of the preceding claims, **characterized in that** the blown film routed through the stretching unit is heated up by means of the temperature-controlled rollers to a temperature which is at least 10 degrees below the glass temperature of the tubular film material.

12. Device according to any one of the preceding claims, **characterized in that** the temperature-controlled rollers have a uniform temperature over the roller width of < 5 degrees Celsius, preferably < 1 degree Celsius.

## Revendications

1. Dispositif pour la fabrication de films tubulaires étirés en ligne à l'aide d'un procédé de soufflage avec une extrudeuse (12), une installation de soufflage de films (14), une unité de mise à plat (20), un dispositif d'extraction réversible (25) et une installation d'étirement (22) pour l'étirement mono-axial du film mis à plat dans le sens de la machine,
**caractérisé en ce que**
l'installation d'étirement est disposée au-dessus de l'extrudeuse entre l'unité de mise à plat et le dispositif d'extraction réversible, et **en ce qu'**entre les rouleaux d'entraînement et les rouleaux de freinage, dans l'installation d'étirement, un couplage de circuit intermédiaire, de préférence un couplage électrique, est prévu pour économiser l'énergie.

2. Dispositif selon la revendication 1, **caractérisé en ce que** l'installation d'étirement est logée de manière rotative, conjointement avec le dispositif d'extraction réversible branché en aval dans le sens de convoyage, au-dessus de l'unité de mise à plat sur une plate-forme.

3. Dispositif selon la revendication 2, **caractérisé en ce que**, sur la plate-forme, à proximité de l'installation d'étirement, sont disposés d'autres composants, comme des convertisseurs électriques et/ou des composants de l'alimentation électrique et/ou des dispositifs d'entraînement.

4. Dispositif selon la revendication 2 ou 3, **caractérisé en ce que**, pour l'alimentation centrale en électrique et en eau, des bagues collectrices ou un raccord rotatif d'eau sont prévus au-dessus de la plate-forme et/ou **en ce qu'**un câble de communication est guidé en tant que ligne de données vers la plate-forme.

5. Dispositif selon l'une des revendications 1 à 4, **caractérisé en ce que**, au-dessus de la plate-forme, à différents endroits, sont disposés des systèmes de surveillance, de préférence des caméras.

6. Dispositif selon l'une des revendications précédentes, **caractérisé en ce que** les rouleaux de l'installation d'étirement sont entraînés individuellement et peuvent être régulés en température et **en ce que** les rouleaux constituent au moins un interstice d'étirement, celui-ci étant réglable de manière avantageuse.

7. Dispositif selon l'une des revendications précédentes, **caractérisé en ce que** les rouleaux de l'installation d'étirement présentent différents diamètres, les rouleaux d'étirement présentant un diamètre relativement plus petit.

8. Dispositif selon l'une des revendications précédentes, **caractérisé en ce que** les rouleaux de l'installation d'étirement présentent un revêtement anti-adhérent.

9. Dispositif selon l'une des revendications précédentes, **caractérisé en ce que** les rouleaux de l'installation d'étirement sont conçus de façon à ce que les avantages d'au moins un rouleau permettent d'appliquer une force d'étirement de 100 à 1000 N.

10. Dispositif selon l'une des revendications précédentes, **caractérisé en ce que**, pour la régulation de la température des rouleaux de l'installation d'étirement, au moins deux circuits de régulation de température sont prévus, à savoir un circuit de chauffage et un circuit de refroidissement.

11. Dispositif selon l'une des revendications précédentes, **caractérisé en ce que** le film soufflé guidé à travers l'installation d'étirement est chauffé au moyen des rouleaux régulés en température à une température qui se trouve au moins 10 degrés en dessous de la température de transition vitreuse du matériau du film tubulaire.

12. Dispositif selon l'une des revendications précédentes, **caractérisé en ce que** les rouleaux régulés en température présentent, sur la largeur des rouleaux, une homogénéité de température de < 5 degrés Celsius, de préférence < 1 degré Celsius.
